(19) Europäisches Patentamt
European Patent Office
Office européen des brevets

(11) EP 1 057 851 B1

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.[7]: **C08J 7/04**, B32B 5/18, C08L 75/04, C08K 9/04

(21) Anmeldenummer: **00110166.6**

(22) Anmeldetag: **12.05.2000**

(54) **Verbundmaterial aus Polyurethan und zumindest einem thermoplastischen Kunststoff, ein Verfahren zu dessen Herstellung sowie dessen Verwendung in Kraftfahrzeugen**

Composite material comprising polyurethane and at least one thermoplastic resin, method for its production and its use in cars

Matériau composite en polyuréthane et au moins une résine thermoplastique, méthode pour sa production et son utilisation dans des automobiles

(84) Benannte Vertragsstaaten:
**AT BE CH CY DE DK ES FI FR GB GR IE IT LI LU MC NL PT SE**

(30) Priorität: **26.05.1999 DE 19924091**

(43) Veröffentlichungstag der Anmeldung:
**06.12.2000 Patentblatt 2000/49**

(73) Patentinhaber: **Bayer MaterialScience AG**
**51368 Leverkusen (DE)**

(72) Erfinder:
- **Reihs, Karsten, Dr.**
  **50968 Köln (DE)**
- **Kempkes, Flore, Dr.**
  **86150 Augsburg (DE)**
- **Köhler, Burkhard, Dr.**
  **51373 Leverkusen (DE)**
- **Warth, Holger, Dr.**
  **41539 Dormagen (DE)**

(56) Entgegenhaltungen:
**EP-A- 0 359 362** **EP-A- 0 449 017**
**EP-A- 0 794 222**

- **PATENT ABSTRACTS OF JAPAN vol. 017, no. 181 (M-1394), 8. April 1993 (1993-04-08) & JP 04 336227 A (TORAY IND INC), 24. November 1992 (1992-11-24)**
- **PATENT ABSTRACTS OF JAPAN vol. 017, no. 135 (C-1037), 19. März 1993 (1993-03-19) & JP 04 309551 A (TORAY IND INC), 2. November 1992 (1992-11-02)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind Verbundmaterialien aus wenigstens zwei unterschiedlichen, direkt miteinander verbundenen Kunststoffmaterialschichten, wovon eine Schicht aus Polyurethan und die damit direkt verbundene Schicht aus einem davon unterschiedlichen thermoplastischen Kunststoffmaterial besteht.

Es ist bekannt, daß Verbunde aus einem thermoplastischen Material und einem Polyurethan, insbesondere einem Polyurethanschaum, keine ausreichende Verbundhaftung aufweisen, da insbesondere nicht umgesetzte, niedermolekulare Reaktionskomponenten als Rückstände von der Herstellung der Kunststoffmaterialien in die Grenzflächen der Schichten segregieren. Es hat daher nicht an Versuchen gefehlt, die Verbundhaftung durch Einsatz von Haftvermittlerschichten zu verbessern. Dies ist aber für den Einsatz in der Kfz-Industrie, wo solche Verbundmaterialien in zunehmendem Maße Verwendung finden, nicht wünschenswert, da wegen der geforderten Aufarbeitungs- und Rückführmöglichkeiten möglichst wenig unterschiedliche Materialien zum Einsatz kommen sollen.

Es stellte sich daher die Aufgabe, die Verbundhaftung zwischen einer Schicht aus Polyurethan und einer damit unmittelbar verbundenen Schicht aus einem thermoplastischen Material zu verbessern.

Die Aufgabe wird erfindungsgemäß durch Bereitstellung eines Verbundmaterials gelöst, das aus wenigstens zwei, unmittelbar miteinander verbundenen Schichten bestehen, wovon

A) eine Verbundschicht aus Polyurethan und
B) eine damit direkt verbundene Verbundschicht aus einem von A) unterschiedlichen thermoplastischen Kunststoff ist,

wobei die Schicht A) teilchenförmiges Material mit einer Teilchengröße im Bereich von ≤ 50 nm, vorzugsweise 1 bis 10 nm, homogen verteilt enthält, und die Teilchen mit einem von A) unterschiedlichen, thermoplastischen Kunststoff, vorzugsweise mit dem Kunststoff der Schicht B) zumindest überzogen sind und die Gesamtoberfläche der Teilchen mindestens der Gesamtgrenzfläche zwischen der Schicht A) und B) entspricht.

Die Teilchen können einen Kern aus einem vorzugsweise anorganischen Material, besonders bevorzugt aus zumindest einem Oxid, Oxidhydrat, Nitrit oder Carbit von Silicium, Aluminium, Titan, Zirkon, Cer oder Brom, insbesondere als $Al_2O_3$, $SiO_2$, $CeO_2$, $ZrO_2$, $TiO_2$ oder Titannitrit aufweisen, wobei der Kern gegebenenfalls eine poröse Struktur aufweisen kann.

Ganz besonders bevorzugt besteht der Kern aus $SiO_2$ oder Aerosil, das gegebenenfalls eine poröse Struktur mit einer glatten Oberfläche aufweist.

Dieser Kern ist mit einem thermoplastischen, von dem Material der Schicht A) unterschiedlichen Kunststoff überzogen. Vorzugsweise ist es der Kunststoff, der die Basis der Schicht B) ist. Ganz besonders bevorzugt wird als thermoplastischer Kunststoff ein Polycarbonat der nachstehend aufgeführten Art verwendet.

Die Teilchen können auch vollständig aus einem von A) unterschiedlichen Kunststoff, vorzugsweise zumindest teilweise aus einem mit B) identischen Kunststoff bestehen. Ganz besonders bevorzugt sind die Teilchen aus Polycarbonat, Polyestercarbonat oder Poly(meth)acrylaten der nachstehend aufgeführten Art.

Die Teilchen weisen eine Größe ≤50 nm, bevorzugt im Bereich von 1 bis 10 nm auf. Die Teilchengröße wird nach bekannten Methoden, wie Transmissions-Elektronenmikroskopie, Sedimentation mit Ultrazentrifugen, Lichtsteuerung oder Fraunhofer-Beugung bestimmt.

Die Gesamtoberfläche der Teilchen, bestimmt durch Stickstoffadsorptionsisothermen nach der BET-Methode, sollte zumindest der Grenzfläche zwischen den verbundenen Schichten A) und B) entsprechen. Vorzugsweise ist die Oberfläche der Teilchen größer als das Ausmaß der Grenzfläche, vorzugsweise zumindest 10 mal größer, besonders bevorzugt 100 mal größer, sofern keine Beeinträchtigung der mechanischen Eigenschaften der Verbunde zu beobachten sind.

Die erfindungsgemäß zum Einsatz kommenden Polyurethane bzw. Polyurethanharnstoffe erhält man durch Umsetzung von Polyisocyanaten mit H-aktiven polyfunktionellen Verbindungen, vorzugsweise Polyolen.

Als Polyisocyanate kommen bevorzugt solche in Frage, die aus der Polyurethanchemie bekannt und dort üblicherweise eingesetzt werden. Es handelt sich dabei insbesondere um Polyisocyanate auf aromatischer Basis, z. B. 2,4-Diiscyanatotoluol, dessen technische Gemische mit 2,6-Diisocyanatotoluol, 4,4'-Düsocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und den bei der nachstehend beschriebenen Komponente B) beispielhaft genannten, einfachen Polyolen und/oder Polyetherpolyolen und/oder Polyesterpolyolen andererseits sowie beliebige Gemische derartiger Isocyanate, sofern sie ausreichend lagerstabil sind.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10 000, vorzugsweise 600 bis 8000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8000, vorzugsweise 800 bis 4000 g/mol, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.-% auf Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Die Polyisocyanatkomponente besitzt eine mittlere Funktionalität von 2 bis 3, bevorzugt 2,3 bis 2,7.

Zur Einstellung eines bestimmten NCO-Gehaltes der Isocyanat-Komponente kann es sinnvoll sein, Anteile von Roh-MDI mit einem NCO-Prepolymeren abzumischen. Die im Roh-MDI enthaltenen Anteile an höherfunktionellem Material (Funktionalität >4) können ohne weiteres toleriert werden, sofern die mittlere Funktionalität von 3 bei der Isocyanat-Komponente nicht überschritten wird.

Als aliphatische Diole mit einer OH-Zahl von >200 mg KOH/g, bevorzugt > 500 mg KOH/g kommen die üblicherweise in der Polyurethanchemie vernetzten Kettenverlängerer in Betracht, wie Ethylenglykol, Diethylenglykol, Propylenglykol, Dipropylenglykol, Butandiol-1,4, Propandiol-1,3. Bevorzugt sind Diole, die eine verbesserte Verträglichkeit mit den Polyolen (ii) der Komponente B) aufweisen. Genannt werden z.B. 2-Butendiol-1,4, Butandiol-1,3, Butandiol-2,3, Butandiol-1,4, 2-Methyl-propandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 500 mg KOH/g und einer mittleren Funktionalität von 2 bis 4. Bevorzugt sind solche mit einer mittleren OH-Zahl von 10 bis 50 mg KOH/g und einer mittleren Funktionalität von 2,7 bis 3. Solche Polyole stellen beispielsweise Polyhydroxypolyether dar, die aus der Polyurethanchemie bekannt sind und die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine, wie Ethylendiamin, Hexamethylendiamin, 2,4-Diaminotoluol, Anilin oder Aminoalkohole oder Phenole wie Bisphenol A. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung niedermolekularer Alkohole mit mehrwertigen Carbonsäuren, wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Es ist aber auch möglich eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung

von Polyurethanen geeignet. Bei Verwendung von Polyetherpolyolen, welche gemäß DE-A 2 442 101, 2 844 922 und 2 646 141 durch Pfropfpolymerisation mit Vinylphosphonsäureestem sowie gegebenenfalls (Meth)acrylnitril, (Meth) acrylamid oder OH-funktionellen (Meth)-acrylsäureestem modifiziert wurden, erhält man Kunststoffe von besonderer Flammwidrigkeit.

Vertreter der genannten als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44-54 und Bd. II, 1984, S. 5-6 und S. 198-199 beschrieben.

Selbstverständlich können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflußmöglichkeiten auf die Polymer-physikalischen Eigenschaften des Polyurethans bekannt, so daß NCO-Komponente, aliphatisches Diol und Polyol in günstiger Weise aufeinander abgestimmt werden können.

Die Verbundschicht A) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

a) Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

b) Katalysatoren der an sich bekannten Art, z.B. tertiäre Amine, wie Triethylamin, Tributylamin, N-Methyl-morpholin, N-Ethyl-morpholin, N,N,N',N'-Tetramethylethylendiamin, Pentamethyl-diethylen-triamin und höhere Homologe, 1,4-Diaza-bicyclo-(2,2,2)-octan, N-Methyl-N-dimethylaminoethylpiperazin, Bis-(dimethylaminoalkyl)piperazine, N, N-Dimethylbenzyl-amin, N,N-Dimethylcyclohexylamin, N,N-Diethylbenzyl-amin, Bis-(N,N-diethylaminoethyl)-adipat, N,N,N',N'-Tetramethyl-1,3-butandiamin, N,N-Dimethyl-β-phenyl-ethylamin, 1,2-Dimethylimidazol, 2-Methylimidazol, monocyclische und bicyclische Amidine, Bis-(dialkylamino)-alkylether sowie Amidgruppen (vorzugsweise Formamidgruppen) aufweisende tertiäre Amine. Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-dietanolamin, N,N-Dimethyl-ethanolamin, deren Umsetzungsprodukte mit Alkylenoxiden wie Propylenoxid und/oder Ethylenoxid sowie sekundärtertiäre Amine.

Als Katalysatoren kommen ferner an sich bekannte Silaamine mit Kohlenstoff-Silizium-Bindungen in Frage, z.B. 2,2,4-Trimethyl-2-silamorpholin und 1,3-Diethylaminomethyl-tetramethyl-disiloxan. Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinnverbindungen, als Katalysatoren verwendet werden. Als organische Zinnverbindungen kommen neben schwefelhaltigen Verbindungen wie Di-noctyl-zinn-mercaptid vorzugsweise Zinn (11)-salze von Carbonsäuren wie Zinn(II)-acetat, Zinn(II)-octoat, Zinn (II)-ethylhexoat und Zin(II)-laurat und die Zinn(IV)-Verbindungen, z.B. Dibutylzinnoxid, Dibutylzinndichlorid, Dibutylzinn-diacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerem, Stabilisatoren, flammhemmenden Substanzen, Weichmachern, Farbstoffen und Füllstoffen sowie fungistatisch und bakteristatisch wirksamen Substanzen sind beschrieben.

Als thermoplastische Kunststoffe B) eignen sich alle bekannten Thermoplasten, vorzugsweise thermoplastische Polyolefine, wie z.B. Polypropylene oder Polyethylene, Polycarbonate, Polyestercarbonate, Styrolcopolymerisate, kautschukhaltige Pfropfstyrol-Copolymerisate wie ABS-Polymerisate, Polyamide und/oder deren thermoplastische Mischungen.

Insbesondere eignen sich folgende Polymere als thermoplastisches Kunststoff B):

Polyolefine wie Polyethylen hoher und niedriger Dichte, die nach bekannten Verfahren hergestellt werden können.

Polyolefine wie Polyethylen hoher und niedriger Dichte, d.h. Dichten von 0,91 g/cm$^3$ bis 0,97 g/cm$^3$, die nach bekannten Verfahren hergestellt werden können.

Weiterhin eignen sich Polypropylene mit Molekulargewichten von 10.000 g/mol bis 1.000.000 g/mol, die nach bekannten Verfahren hergestellt werden können.

Es sind aber auch Copolymerisate der genannten Olefine oder mit weiteren $\alpha$-Olefinen möglich, wie beispielsweise

Polymere aus Ethylen mit Buten, Hexen und/oder Octen
EVA (Ethylenvinylacetatcopolymerisate)
EEA (Ethylenethylacryatcopolymerisate)
EBA (Ethylenbutylacrylatcopolymerisate)
EAS (Ethylenvinylcarbazolcopolymerisate)
EPB (Ethylen-propylen-Blockcopolymere)
EPDM (Ethylen-Propylen-Dien-Copolymerisate)
PB (Polybutylene)
PMP (Polymethylpentene)
PIB (Polyisobutylene)
Methyl-butylencopolymerisate
Isopren-isobutylencopolymerisate

Die Herstellungsverfahren solcher Polymerisate sind bekannt.

Erfindungsgemäß besonders geeignete thermoplastische Kunststoffe für die Verbundschicht B) sind auch thermoplastische, aromatische Polycarbonate, insbesondere solche auf Basis der Diphenole der Formel (I)

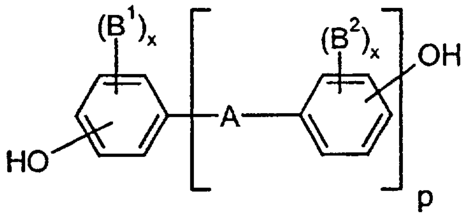

(I)

worin

A eine Einfachbindung, $C_1$-$C_5$-Alkylen, $C_2$-$C_5$-Alkyliden, $C_5$-$C_6$-Cycloalkyliden, -S-, $-SO_2-$, -O-, -CO-, oder ein $C_6$-$C_{12}$-Arylen-Rest, der gegebenenfalls mit weiteren, Heteroatome enthaltenden aromatischen Ring kondensiert sein kann,

die Reste B, unabhängig voneinander, jeweils ein $C_1$-$C_8$-Alkyl, $C_6$-$C_{10}$-Aryl, besonders bevorzugt Phenyl, $C_7$-$C_{12}$-Aralkyl, bevorzugt Benzyl, Halogen, bevorzugt Chlor, Brom,

x unabhängig voneinander, jeweils 0, 1 oder 2 und

p 1 oder 0 bedeuten,

oder alkylsubstituierte Dihydroxyphenylcycloalkane der Formel (II),

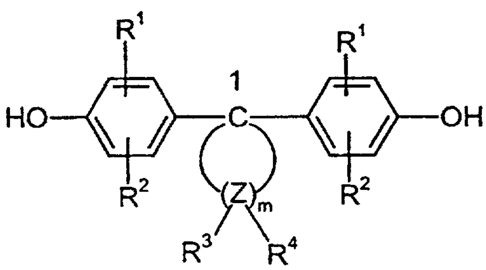

(II)

worin

$R^1$ und $R^2$ unabhängig voneinander jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-alkyl, insbesondere Benzyl,

m eine ganze Zahl von 4 bis 7, bevorzugt 4 oder 5,

$R^3$ und $R^4$ für jedes Z individuell wählbar, unabhängig voneinander Wasserstoff oder $C_1$-$C_6$-Alkyl, vorzugsweise Wasserstoff, Methyl oder Ethyl,

und

Z Kohlenstoff bedeutet, mit der Maßgabe, daß an mindestens einem Atom Z $R^3$ und $R^4$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring C-Atomen im cycloaliphatischen Rest [(m = 4 oder 5 in Formel (I)] wie beispielsweise die Diphenole der Formeln

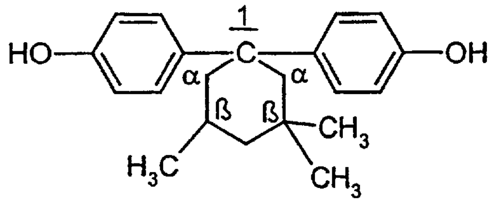

(IIa)

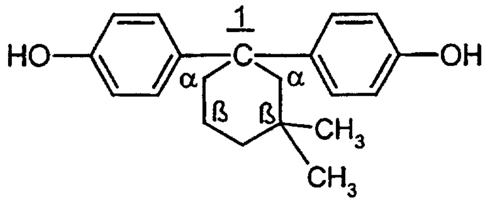

(IIb)

und

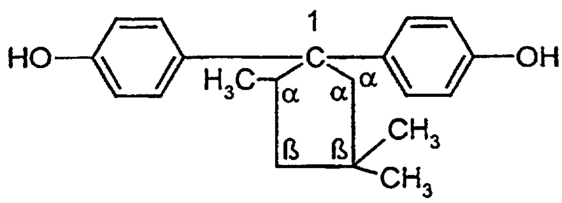

(IIc)

wobei das 1,1-Bis-(4-hydroxyphenyl)-3,3,5-trimethylcyclohexan (Formel (IIa)) besonders bevorzugt ist.

Die erfindungsgemäß geeigneten Polycarbonate können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl)-isopropyl)-phenol,
2,6-Bis-(2-hydroxy-5'-methyl-benzyl)-4-methylphenol,
2-(4-hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4',4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die Mol-Summe an Diphenolen, an 2,2-Bis-(3,5-dibrom-4-hydroxyphenyl)-propan.

Die zur Herstellung der Verbundschicht B) zum Einsatz kommenden aromatischen Polycarbonate können teilweise durch aromatische Polyestercarbonate ausgetauscht werden.

Aromatische Polycarbonate und/oder aromatische Polyestercarbonate gemäß Komponente A sind literaturbekannt oder nach literaturbekannten Verfahren herstellbar.

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen.

Weiterhin sind als thermoplastische Kunststoffe für die Schicht B) Styrol-Copolymerisate von einem oder wenigstens zwei ethylenisch ungesättigten Monomeren (Vinylmonomeren) geeignet, wie beispielsweise von Styrol, $\alpha$-Methylstyrol, kernsubstituierten Styrolen, Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die Copolymerisate sind harzartig, thermoplastisch und kautschukfrei.

Bevorzugte Styrol-Copolymerisate sind solche aus wenigstens einem Monomeren aus der Reihe Styrol, $\alpha$-Methylstyrol und/oder kernsubstituiertem Styrol mit wenigstens einem Monomeren aus der Reihe Acrylnitril, Methacrylnitril, Methylmethacrylat, Maleinsäureanhydrid und/oder N-substituiertem Maleinimid.

Besonders bevorzugte Gewichtsverhältnisse im thermoplastischen Copolymerisat sind 60 bis 95 Gew.-% der Styrolmonomeren und 40 bis 5 Gew.-% der weiteren Vinylmonomeren.

Besonders bevorzugte Copolymerisate sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenfalls mit Methylmethacrylat.

Die Styrol-Acrylnitril-Copolymerisate sind bekannt und lassen sich durch radikalische Polymerisation, insbesondere durch Emulsions-, Suspensions-, Lösungs- oder Massepolymerisation herstellen. Die Copolymerisate besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte Copolymerisate sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-maleinsäureanhydrid-Copolymeren können innerhalb weiterer Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie $\alpha$-Methylstyrol, enthalten.

Die Molekulargewichte (Zahlenmittel $\overline{M}_n$) Styrol-Maleinsäureanhydrid-Copolymeren können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C).

Geeignet als thermoplastische Kunststoffe für die Schicht B) sind auch Pfropf-Copolymerisate. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente. Bevorzugte Pfropfpolymerisate sind partiell vernetzt und besitzen Gelgehalte von über 20 Gew.-%, vorzugsweise über 40 Gew.-%, insbesondere über 60 Gew.-%.

Bevorzugt zum Einsatz kommende Pfropf-Copolymerisate sind z.B. Copolymerisate aus Styrol und/oder Acrylnitril und/oder (Meth)Acrylsäurealkylester gepfropft auf Polybutadiene, EPDM, Butadien/Styrol-Copolymerisate und Acrylatkautschuke; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene.

Besonders bevorzugte Polymerisate sind an sich bekannte ABS-Polymerisate.

Die Pfropf-Copolymerisate können nach bekannten Verfahren wie Masse-, Suspension, Emulsions- oder Masse-Suspensionsverfahren hergestellt werden.

Als thermoplastische Polyamide können für die erfindungsgemäßen Verbunde Polyamid 66 (Polyhexamethylenadipinamid) oder Polyamide von cyclischen Lactamen mit 6 bis 12 C-Atomen, bevorzugt von Laurinlactam und besonders bevorzugt $\varepsilon$-Caprolactam = Polyamid 6 (Polycaprolactam) oder Copolyamide mit Hauptbestandteilen 6 oder 66 oder Abmischungen mit Hauptbestandteil der genannten Polyamide verwendet werden. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Die aktivierte anionische Polymerisation von Lactamen zu Polyamiden wird in technischem Maßstab so durchgeführt, daß man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise eine konzentrierte Aktivator- sowie Katalysatorschmelze zu einer Lactamschmelze dosieren. Weitere Additive können je nach Verträglichkeit in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Der Katalysator ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne kann N-Acyllactame oder Säurechloride oder, bevorzugt, aliphatische Isocyanate, besonders bevorzugt Oligomere des Hexamethylendiisocyanats sein. Als Aktivator kann sowohl die Reinsubstanz wie auch bevorzugt eine Lösung, beispielsweise in N-Methylpyrrolidon, dienen.

Die Verbunde können in bekannter Weise hergestellt werden. Vorzugsweise wird die Verbundschicht B) aus thermoplastischen Polymeren vorgefertigt und darauf das Polyurethanreaktionssystem aufgebracht und ausreagiert. Je nach Reaktivität der Polyurethanreaktionskomponenten können diese bereits vorgemischt sein oder während des Auftragens in bekannter Weise vermischt werden. Das Auftragen erfolgt vorzugsweise durch Sprühen, Rakeln oder Kalandrieren. Es ist aber auch möglich, die erfindungsgemäßen Verbunde durch Coextrusion nach bekannten Methoden herzustellen. Dabei wird das teilchenförmige Material vorzugsweise in einer der Polyurethan-Reaktionskomponenten eingebracht, bevor das System aufgetragen wird.

Insbesondere werden die Polyurethan-Reaktionskomponenten nach dem an sich bekannten Einstufenverfahren, dem Prepolymerverfahren oder dem Semiprepolymerverfahren zur Umsetzung gebracht. Einzelheiten über Verarbeitungseinrichtungen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der PU-Schaumstoffherstellung kann erfindungsgemäß die Verschäumung auch in geschlossenen Formen durchgeführt werden. Dabei wird das Reaktionsgemisch in eine Form eingetragen, in der sich bereits die Verbundschicht B) befindet. Als Formmaterial kommt Metall, z.B. Aluminium, oder Kunststoff, z.B. Epoxidharz, in Frage. In der Form schäumt das schäumfähige Reaktionsgemisch auf und bildet den Verbund-Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Dabei kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit in an sich bekannter Weise unter "ober-charging" gearbeitet.

Bei der Formverschäumung werden vielfach an sich bekannte "äußere Trennmittel" wie Silikonöle, mitverwendet. Man kann aber auch sogenannte "innere Trennmittel", gegebenenfalls im Gemisch mit äußeren Trennmitteln, verwenden.

Erfindungsgemäß lassen sich auch kalthärtende Schaumstoffe herstellen.

Selbstverständlich können aber auch Schaumstoffe durch Blockverschäumung oder nach dem an sich bekannten Doppeltransportbandverfahren hergestellt werden, das für die kontinuierliche Herstellung der erfindungsgemäßen Verbunde bevorzugt ist.

Auch bei diesen Verfahrensweisen wird das teilchenförmige Material vor dem Ausreagieren der PUR-Komponenten in einer Komponente verteilt.

Bevorzugt wird auch die Herstellung von Polyurethan-Verbundkörpem in Sandwichbauweise. Das Verfahren kann dabei sowohl als Depot- oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

Für die Herstellung kompakter PUR-Materialien werden die beiden PU-Reaktionskomponenten, wie oben dargestellt durch einfaches Vermischen bei Raumtemperatur zur Reaktion gebracht werden.

Eine anschließende weitere Beschichtung der Schicht A) kann durch die üblichen, bekannten Verfahren der Lackierung, Metallisierung oder weitere Beschichtung mit einer polymeren Schicht (z.B. wie die Schicht A) vorgenommen werden.

Die erfindungsgemäßen Verbunde werden vorzugsweise bei der KFZ-Herstellung verwendet, insbesondere bei der Innenauskleidung, z.B. als Beschichtungsmaterial von Armaturenbrettern oder Säulenverkleidungen.

Die Erfindung wird durch die nachfolgenden Beispiele erläutert.

## Beispiele

Die Verbundhaftung wird, wie folgt, in Anlehnung an DIN 53 357 getestet:

Die polymere Schicht A) wird als dünner Film gemäß der entsprechenden DIN-Norm auf den Träger B) aufgetragen. Anschließend wird die Trennkraft bei der Trennung des Verbundes durch z.B. einen üblichen Rollenschälversuch in Anlehnung an DIN 53 357 gemessen.

## Beispiel 1

50 g Aerosil-300 (Degussa) werden in 1 1 Toluol mit einem Ultraschallstab suspendiert. Anschließend wird 5 ml N-Methylaminopropyltrimethoxysilan, 0,5 g p-Toluolsulfonsäure, 0,1 g Dibutylzinnoxid, sowie 2 g Wasser zugegeben und erneut suspendiert. Die Lösung wird 8 h bei 110°C unter Rückfluß gerührt. Das Lösungsmittel wird am Rotationsverdampfer abgezogen. Der Rückstand wird zusammen mit 20 g Polycarbonat auf Basis von Bisphenol A (Mn = 20 000 g/mol) in 1 1 Methylenchlorid mit dem Ultraschallstab suspendiert und anschließend 8 h bei 50°C unter Rückfluß gerührt.

0,5 g der erkalteten Suspension werden in 25 g technischem 4,4'-Diisocyanatodiphenylmethan gelöst, anschließend wird das Lösungsmittel durch Rühren bei 40°C entfernt. Diese Mischung wird mit 58 g eines trifunktionellen Poly(ethylenoxidpropylenoxid) (83:17 Molanteile, Trimethylolpropan-Basis, Säurezahl 28) und 1,7 g Wasser vermischt und auf eine Platte Polycarbonat auf Basis von Bisphenol-A (Dicke 4 mm) in einen Rahmen gegossen. Die Schaum-Schichtdicke der Polyurethanschicht beträgt ca. 1 cm.

Vor der Haftungsprüfung wird der Schicht-Verbund einer 10-tägigen Belastung in einem Klimawechseltest unterworfen (Zyklen von -40°C bis 80°C, bzw. 0 bis 80 % rel. Feuchte, Zykluszeit 12 h). Die anschließende Haftungsprüfung wurde durch einen 90°-Schälversuch (in Anlehnung an DIN 53 357 - gemäß oben angegebener Methode) nach Reduzierung der Schaumdicke auf 2 mm durchgeführt.

Die Schälkräfte einer 20 mm breiten Probe betragen >5N.

Eine Polyurethanschaumschicht, die keine Teilchen enthält, jedoch sonst in der gleichen Weise hergestellt wurde, zeigt eine weit geringere Haftung mit Schälkräften von 2 ± 0,3 N in dem Verbund mit Polycarbonat auf Basis von Bisphenol-A (Dicke 4 mm).

## Patentansprüche

1. Verbundmaterial aus wenigstens zwei unmittelbar miteinander verbundenen Schichten unterschiedlicher Kunststoffe, wovon

   A) eine Verbundschicht aus Polyurethan und

   B) eine damit direkt verbundene Verbundschicht aus einem von A) unterschiedlichen thermoplastischen Kunststoff ist,

   **dadurch gekennzeichnet, daß** die Schicht A) mit einem von A) unterschiedlichen, thermoplastischen Kunststoff zumindest überzogene Teilchen einer Teilchengröße im Bereich von ≤ 50 nm homogen verteilt enthält, wobei die Gesamtoberfläche der Teilchen zumindest dem Ausmaß der Gesamtgrenzfläche zwischen der Schicht A) und B) entspricht.

2. Verbundmaterial nach Anspruch 1, **dadurch gekennzeichnet, daß** die Teilchen einen Kern aus anorganischem Material aufweisen.

3. Verbundmaterial nach Anspruch 2, **dadurch gekennzeichnet, daß** der Kern aus zumindest einem Oxid, Oxidhydrat, Nitrit oder Carbit von Silicium, Aluminium, Titan, Zirkon, Cer oder Brom besteht.

4. Verbundmaterial nach Anspruch 1, **dadurch gekennzeichnet, daß** die Teilchen aus einem thermoplastischen, von A) unterschiedlichen Kunststoff bestehen.

5. Verbundmaterial nach Anspruch 4, **dadurch gekennzeichnet, daß** die Teilchen aus Polycarbonat oder Polyestercarbonat bestehen.

6. Verbundmaterial nach einem der Ansprüche 1 bis 5, **dadurch gekennzeichnet, daß** die Verbundschicht A) ein

Polyurethanschaum oder eine kompakte Polyurethanschicht ist.

**7.** Verbundmaterial nach einem der Ansprüche 1 bis 6, **dadurch gekennzeichnet, daß** die Verbundschicht B) aus einem Polyolefin, Ethylenpropylencopolymerisat, Polyamid, Polycarbonat, Polyestercarbonat, Styrolcopolymerisat oder einem entsprechenden Pfropfcopolymerisat oder deren Mischungen besteht.

**8.** Verfahren zur Herstellung eines Verbundmaterials aus wenigstens zwei unmittelbar miteinander verbundenen Schichten unterschiedlicher Kunststoffe, wovon

A) eine Verbundschicht aus Polyurethan und

B) eine direkt damit verbundene Verbundschicht aus einem von A) unterschiedlichen thermoplastischen Kunststoff ist,

**dadurch gekennzeichnet, daß** man die Schicht A), enthaltend mit einem von A) unterschiedlichen, thermoplastischen Kunststoff zumindest überzogene Teilchen einer Teilchengröße im Bereich von ≤ 50 nm, auf die Verbundschicht B) aufbringt, wobei die Gesamtoberfläche der Teilchen zumindest dem Ausmaß der Gesamtgrenzfläche zwischen der Schicht A) und B) entspricht.

**9.** Verwendung des Verbundmaterials nach einem oder mehreren der Ansprüche 1 bis 7 als Werkmaterial im Kraftfahrzeugbau.

## Claims

**1.** A composite material comprising at least two layers of different plastics materials which are directly bonded to each other, of which

A) one layer of the composite is made of polyurethane, and

B) a layer of the composite which is directly bonded thereto is made of a thermoplastic plastics material which is different from A),

**characterised in that** layer A) contains homogeneously distributed particles, which are at least coated with a thermoplastic plastics material which is different from A), and which have a particle size in the range of ≤ 50 nm, wherein the total surface area of the particles corresponds at least to the extent of the total interface between layers A) and B).

**2.** A composite material according to claim 1, **characterised in that** the particles have a core of inorganic material.

**3.** A composite material according to claim 2, **characterised in that** the core consists of at least one oxide, hydrated oxide, nitride or carbide of silicon, aluminium, titanium, zirconium, cerium or bromine.

**4.** A composite material according to claim 1, **characterised in that** the particles consist of a thermoplastic plastics material which is different from A).

**5.** A composite material according to claim 4, **characterised in that** the particles consist of polycarbonate or polyester carbonate.

**6.** A composite material according to any one of claims 1 to 5, **characterised in that** layer A) of the composite is a polyurethane foam or a solid polyurethane layer.

**7.** A composite material according to any one of claims 1 to 6, **characterised in that** layer B) of the composite consists of a polyolefine, an ethylene-propylene copolymer, a polyamide, a polycarbonate, a polyester carbonate, a styrene copolymer or a corresponding graft copolymer or mixtures thereof.

**8.** A process for producing a composite material comprising at least two layers of different plastics materials which are directly bonded to each other, of which

A) one layer of the composite is made of polyurethane, and

B) a layer of the composite which is directly bonded thereto is made of a thermoplastic plastics material which is different from A),

**characterised in that** layer A), which contains particles which are at least coated with a thermoplastic plastics material which is different from A) and which have a particle size in the range of ≤ 50 nm, is applied to layer B) of the composite, wherein the total surface area of the particles corresponds at least to the extent of the total interface between layers A) and B).

9. The use of the composite materials according to one or more of claims 1 to 7 as a working material in the construction of motor vehicles.

## Revendications

1. Matière composite consistant en au moins deux couches, en contact direct entre elles, de résines synthétiques différentes, dont

A) une couche de polyuréthanne, et
B) une couche de résine synthétique thermoplastique autre que A), associée directement à celle-ci,

cette matière **se caractérisant en ce que** la couche A) contient en répartition homogène des particules au moins revêtues d'une résine synthétique thermoplastique autre que A), à une dimension de particule inférieure ou égale à 50 nm, la surface totale des particules correspondant au moins à la surface limite totale entre la couche A) et la couche B).

2. Matière composite selon la revendication 1, **caractérisée en ce que** les particules ont un noyau de matière minérale.

3. Matière composite selon la revendication 2, **caractérisée en ce que** le noyau consiste en au moins un oxyde, oxyde hydraté, nitrite ou carbure du silicium, de l'aluminium, du titane, du zirconium, du cérium ou du brome.

4. Matière composite selon la revendication 1, **caractérisée en ce que** les particules consistent en une résine synthétique thermoplastique autre que A).

5. Matière composite selon la revendication 4, **caractérisée en ce que** les particules consistent en polycarbonate ou polyester-carbonate.

6. Matière composite selon l'une des revendications 1 à 5, **caractérisée en ce que** la couche A) est une couche de mousse de polyuréthanne ou une couche de polyuréthanne compacte.

7. Matière composite selon l'une des revendications 1 à 6, **caractérisée en ce que** la couche B) consiste en une polyoléfine, un copolymère éthylène-propylène, un polyamide, un polycarbonate, un polyester-carbonate, un copolymère du styrène ou un copolymère greffé correspondant ou un mélange de tels polymères.

8. Procédé pour la préparation d'une matière composite consistant en au moins deux couches, en contact direct entre elles, de résines synthétiques différentes, dont

A) une couche de polyuréthanne et
B) une couche d'une résine synthétique thermoplastique autre que A), associée directement à la couche A),

**caractérisé en ce que**, sur la couche B), on applique la couche A), contenant des particules au moins revêtues d'une résine synthétique thermoplastique autre que A), à une dimension de particule inférieure ou égale à 50 nm, la surface totale des particules correspondant au moins à la surface limite totale entre la couche A) et la couche B).

9. Utilisation de la matière composite selon une ou plusieurs des revendications 1 à 7 en tant que matériau dans la construction de véhicules.